(19) Europäisches Patentamt
European Patent Office
Office européen des brevets

(11) EP 0 819 720 A1

(12) EUROPÄISCHE PATENTANMELDUNG

(43) Veröffentlichungstag:
21.01.1998 Patentblatt 1998/04

(51) Int. Cl.6: C08G 77/60

(21) Anmeldenummer: 97111976.3

(22) Anmeldetag: 14.07.1997

(84) Benannte Vertragsstaaten:
AT BE CH DE DK ES FI FR GB GR IE IT LI LU MC
NL PT SE

(30) Priorität: 15.07.1996 DE 19628448

(71) Anmelder: BAYER AG
51368 Leverkusen (DE)

(72) Erfinder:
- Jansen, Martin, Prof. Dr.
53127 Bonn (DE)
- Jüngermann, Hardy
59457 Werl (DE)

# (54) Polymere Silaborocarboazane, ein Verfahren zu deren Herstellung und deren Verwendung

(57) Die vorliegende Erfindung betrifft neue polymere Silaborocarboazane, ein Verfahren zu deren Herstellung und deren Verwendung.

EP 0 819 720 A1

## Beschreibung

Die vorliegende Erfindung betrifft neue polymere Silaborocarboazane, ein Verfahren zu deren Herstellung und deren Verwendung.

Das Verfahren zur Erzeugung multinärer, nichtoxidischer Keramiken über molekulare Einkomponentenvorläufer hat herausragende Bedeutung erlangt. Es ermöglicht den Zugang zu nitridischen und carbonitridischen Stoffsystemen, die über herkömmliche Festkörperreaktionen nicht zugänglich sind. Die Produkte zeichnen sich durch hohe Reinheit, homogene Elementverteilung und gleichmäßige Partikelgröße aus.

Werkstoffe, die aus Si, B und N und evtl. auch C bestehen, zeigen besondere Eigenschaften hinsichtlich der thermischen Stabilität und der Oxidationsbeständigkeit. Sie können als Bulkmaterial aber auch für Beschichtungen und als Fasermaterial verwendet werden. Die borhaltigen Materialien zeigen eine erhöhte Kristallisationshemmung, wahrend die kohlenstoffhaltigen darüber hinaus höhere Zersetzungstemperaturen als kohlenstofffreie Keramiken aufweisen.

Gemäß US-A-5 233 066 gelingt die Synthese der amorphen Keramiken $Si_3B_3N_7$ und $SiBN_3C$ aus dem Precursor Trichlorsilyl-aminodichlorboran (TADB) durch Vernetzung mit Ammoniak oder Aminen und anschließender Pyrolyse im Gasstrom. Das entstandene Siliciumborcarbonitrid zeichnet sich durch hervorragende keramische Eigenschaften aus.

Bei dieser Methode ist die Zusammensetzung der Produkte zum einen durch den Einkomponentenvorläufer und zum anderen durch die Art der Vernetzung vorgegeben. Wahrend das Si:B-Verhältnis durch den Precursor auf 1:1 festgelegt ist, ist das N:C-Verhältnis durch die Wahl von Methylamin als vernetzendes Reagenz und dessen Pyrolyseverhalten abhängig.

Der Kohlenstoff wird dabei in die Keramik über die organische Seitenkette des Amins eingebaut. Dies geschieht jedoch unkontrolliert über eine noch nicht bekannte Reaktion. Nachteil dieser Verfahrensweise liegt in der geringen Variationsmöglichkeit des C-Anteils, da eine Verlängerung der Seitenkette nicht zwangsläufig zu einem höheren C-Anteil in der Keramik, sondern zu Graphitausscheidungen im Material führt, was die Eigenschaften nachteilig beeinflußt. Zudem geht ein großer Teil des Kohlenstoffs bei der Pyrolyse verloren, da die Seitenketten in Form von flüchtigen Alkanen, Alkenen usw. abgespalten werden.

Aufgabe dieser Erfindung ist die Bereitstellung neuartiger, einfach und in großen Ausbeuten darstellbarer polymerer Silaborocarboazane, aus denen keramisches Material oder keramische Formkörper, Folien etc. in guter Ausbeute herstellbar ist. Durch Pyrolyse dieser polymeren Silaborocarboazane sollen carbonitridische Keramiken erzeugt werden, die nur aus Si, B, N und C bestehen und die oben beschriebenen Nachteile nicht aufweisen.

Die Anforderungen werden durch folgende Polymere erfüllt, die Gegenstand dieser Erfindung sind. Es handelt sich um polymere Silaborocarboazane der allgemeinen Strukturformel

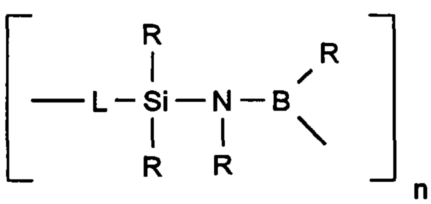 ,

in denen jedes Si-Atom mit 2 Resten R und einem Rest L und jedes B-Atom mit einem Rest R und einem Rest L koordiniert ist und Silicium und Bor über eine NR-Brücke verknüpft sind, wobei L = $C_xN_yH_z$ mit $x \geq 1$, $y \geq 1$ und $z \geq 0$ und R unabhängig voneinander = $C_1$-$C_6$-Alkyl, Vinyl, Phenyl oder L ist und n Werte von größer als fünf einnimmt.

Die $SiR_2(NR)BR$-Einheiten der polymeren Silaborocarboazane sind dabei vorzugsweise mindestens über eine Brücke L zu Ketten oder Ringen verknüpft.

In einer bevorzugten Ausführungsform liegen in den erfindungsgemäßen polymeren Silaborocarboazanen die Elemente in homogener Verteilung vor. In einer besonders bevorzugten Ausführungsform ist die Elementverteilung bis mindestens zu einer Auflösung von 0,5 µm gleichförmig.

Gegenstand der Erfindung ist weiterhin ein Verfahren zur Herstellung der erfindungsgemäßen polymeren Silaborocarboazane, wonach ein Borosilazanprecursor der Formel

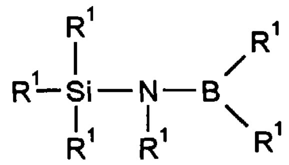 ,

in dem $R^1$ unabhängig voneinander = H, Halogen, $C_1$-$C_6$-Alkyl, Vinyl, Phenyl und/oder $NR^2_2$ mit $R^2$ = H, $C_1$-$C_6$-Alkyl, Vinyl oder Phenyl bedeutet, mit $C_xN_yH_z$-Molekülen umgesetzt wird, die freie NH- und/oder CH-Funktionen aufweisen und in denen $x \geq 1$, $y \geq 1$ und $z \geq 0$ ist. Als Borosilazanprecursor wird bevorzugt $(Me_2N)_3Si$-NH-$B(NMe_2)_2$ (TABB) eingesetzt.

Als $C_xN_yH_z$-Moleküle, die freie NH- und/oder CH-Funktionen aufweisen, werden dabei bevorzugt Formamidin, Guanidin, Aminoguanidin, Diaminoguanidin, Hydrazin, Methylhydrazin, Dimethylhydrazin, Dicyanamid, Triazol, Melamin, Aminoacetonitril, Aminotriazol, Cyanguanidin, Diaminotriazol, Acetamidin, Methylguanidin, Ethylendiamin, Aminomalonsäuredinitril, Aminotriazine, Acetylene und/oder Propargylamine eingesetzt. Besonders bevorzugt ist der Einsatz von Cyanamid, Guanidin, Formamidin und/oder Melamin.

In einer bevorzugten Ausführungsform wird die Reaktion bei Temperaturen zwischen -80°C und 200°C, bevorzugt 20°C, entweder in Substanz oder in einem aprotischen organischen Lösemittel, das ein $C_5$-$C_8$-Alkan, ein acyclischer oder cyclischer Ether, ein Alkylaromat, wie z.B. Toluol oder Pyridin, DMF oder DMSO sein kann, durchgeführt. Besonders bevorzugt ist die Durchführung der Umsetzung in einem aprotischen organischen Lösungsmittel.

Die Anzahl und das Mischungsverhältnis der eingesetzten N-C-H-Verbindungen kann beliebig gewählt werden, so daß im Produkt jede gewünschte Stöchiometrie bezüglich der Elemente C und N eingestellt werden kann. Bevorzugt ist ein Verhältnis von Borosilazanprecursor zu der $C_xN_yH_z$-Molekühlen von 1:2,5 bis 1:10, besonders bevorzugt 1:5.

Über die Konzentration der N-C-H-Verbindungen ist eine Steuerung des Vernetzungsgrades und der Molmassen der erfindungsgemäßen Polymere möglich. Bei niedrigen Konzentrationen können viskose Öle erhalten werden, bei höheren Konzentrationen entstehen Feststoffe.

Zur Herstellung von Pulvern wird das Lösemittel mit dem überschüssigen Vernetzungsreagenz entfernt und das Polymer unter vermindertem Druck getrocknet. Geeignet sind auch andere gebräuchliche Trocknungsverfahren.

Gegenstand der Erfindung ist auch die Verwendung der erfindungsgemäßen polymeren Silaborocarboazane zur Herstellung von keramischem Material durch Pyrolyse in inerter Stickstoff- oder Edelgas-haltiger Atmosphäre bei Temperaturen von 400 bis 2000°C, bevorzugt 1500°C.

In einer bevorzugten Ausführungsform werden die Polymere zur Synthese von keramischen Pulvern auf eine Temperatur zwischen 100 und 600°C aufgeheizt und mehrere Stunden getempert. Anschließend werden sie zur Entfernung von Wasserstoff bei Temperaturen zwischen 1200 und 1500°C in Stickstoff- oder Argonatmosphäre calciniert.

Ebenfalls Gegenstand dieser Erfindung ist die Verwendung der erfindungsgemäßen polymeren Silacarboazane zur Herstellung von keramischen Formkörpern, Folien, Fasern oder Beschichtungen durch Pyrolyse in Edelgas-, Stickstoff-, Ammoniak-oder primäre Amine-enthaltender Atmosphäre bei Temperaturen von 400 bis 2000°C.

Die Wahl der $C_xN_yH_z$-Verbindung ermöglicht eine Steuerung der Eigenschaften der erfindungsgemäßen polymeren Silaborocarboazane. Je nach N-C-H-Verbindung entstehen unlösliche Duromere oder lösliche Thermoplaste, die direkt in Lösung oder als Schmelze verschiedenen Formgebungsprozessen unterzogen werden können, z.B. Formgießen, Verspinnen zu Fasern, Ziehen von Folien, Herstellung von Beschichtungen durch verschiedene Beschichtungsverfahren wie Tauch-(Dip-Coating) oder Fliehkraftbeschichtungen (Spin-Coating).

Im folgenden ist die Erfindung beispielhaft erläutert, ohne daß hierin eine Einschränkung zu sehen ist.

**Beispiel 1:**

**Darstellung eines Polyborosilazans mit Cyanamid**

Reaktionsgleichung:

$$(Me_2N)_3Si\text{-}NH\text{-}B(NMe_2)_2 + H_2CN_2 \rightarrow [SiBN_xC_yH_z] + Me_2NH$$

(TABB)

Versuchsdurchführung:

Eine Lösung von 2,1 g (0,05 Mol) Cyanamid in 100 ml THF wurde zum Sieden erhitzt. Dazu wurden 2,7 g (0,01 Mol) TABB, das in 10 ml THF gelöst war, getropft. Anschließend ließ man noch eine Stunde sieden. Das Polymer fiel als weißer Feststoff aus. Das THF mit dem überschüssigen Cyanamid wurde abgetrennt und der Niederschlag unter vermindertem Druck 5 h bei 160°C getrocknet.

Analytische Daten des Polymers:

Infrarotspektroskopie [$cm^{-1}$]:

| Wellenzahl/ν | Zuordnung |
|---|---|
| 3340 (s, b) | ν N-H |
| 2193 (m), 2151 (m) | $\nu_s$ N=C=N |
| 1639 (s), 1556 (s) | δ N-H |
| 1498 (w), 1436 (w) | $\nu_s$ N=C=N |
| 1323 (w) | ν B-N |
| 1067 (m,b) | ν Si-N |
| 553 (m, b) | |

Pulverdiffraktometrie: amorph.
Energiedispersive Röntgenanalyse: Homogenes Polymer.

1,028 g des Polymeren wurden im Stickstoffstrom mit 5 K/min auf 200°C und nach 4 h Haltezeit mit 5 K/min auf 1500°C mit 24 h Haltezeit pyrolysiert. Es wurden 0,218 g eines samtschwarzen, amorphen Pulvers erhalten, entsprechend einer keramischen Ausbeute von 21 %.

Analytische Daten des Pyrolyseprodukts:

Infrarotspektroskopie [$cm^{-1}$]:

| | |
|---|---|
| 3443 (w, vb) | OH-Wasserbanden |
| 1398 (m, vb) | ν B-N |
| 896 (m, b) | ν Si-N |
| 788 (w), 753 (w) | δ B-N |
| 500 (w) | |
| 418 (w) | δ Si-N |

Puverdiffraktometrie: amorph.
Energiedispersive Röntgenanalyse: homogene Elementverteilung mindestens bis zur Auflösungsgrenze von 0,5 µm.

Wie Figur 1 zeigt, weist das Pyrolyseprodukt kugelförmige Teilchen mit Durchmessern zwischen 0,5 und 2 µm auf.

Elementaranalyse [Gew.-%]: Si 26,3; B 10,9; N 29,8; C 29,0; O 2,7.

**Beispiel 2:**

**Darstellung eines Polyborosilazans mit Cyanguanidin**

Reaktionsgleichung:

$$(Me_2N)_3Si\text{-}NH\text{-}B(NMe_2)_2 \;+\; H_2N\text{-}CNH\text{-}NH\text{-}CN \;\rightarrow\; [SiBN_xC_yH_z] \;+\; Me_2NH$$

(TABB)

Versuchsdurchführung:

Einer Lösung von 3,9 g (0,0041 Mol) Cyanguanidin in 400 ml Dimethylethylenglykolether wurden bei Raumtemperatur unter Rühren 2 g (0,0073 Mol) TABB in 10 ml Dimethylethylenglykolether zugetropft. Es entstand ein weißes Polymer, das abfiltriert und unter vermindertem Druck getrocknet wurde.

Analytische Daten des Polymers:

Infrarotspektroskopie [$cm^{-1}$]:

| | |
|---|---|
| 3430 (s, b) | ν N-N |
| 2195 (m), 2161 (m) | ν CN |
| 1641 (m) | ν C=N |
| 1560 (m), 1498 (w) | δ N-H |
| 1321 (w) | |
| 1258 (w) | ν C-N |
| 1022 (w, b) | ν Si-N |
| 929 (w) | ν Si-N |
| 556 (w) | |
| 465 (w, b) | δ Si-N |

Pulverdiffraktometrie: amorph.
Energiedispersive Röntgenanalyse: homogenes Polymer.

234 mg des Polymers wurden im Stickstoffstrom mit 5 K/min bei 300°C und nach 4 h Haltezeit mit 5 K/min auf 1500°C geheizt. Man erhielt 50,6 mg graues Pyrolyseprodukt, entsprechend einer keramischen Ausbeute von 21,6 %.

**Beispiel 3:**

**Darstellung eines Polyborosilazans mit Formamidin**

Reaktionsgleichung:

$$(Me_2N)_3Si\text{-}NH\text{-}B(NMe_2)_2 + H_2N\text{-}CH{=}NH \rightarrow [SiBN_xC_yH_z] + Me_2NH$$

(TABB)

Versuchsdurchführung:

6,7 g (0,083 Mol) Formamidinhydrochlorid wurden in 250 ml Dimethylsulfoxid und 5 ml Chloroform gelöst. Dazu wurden schnell 2,7 g (0,01 Mol) TABB getropft. Beim anschließenden Erwärmen fiel ein anfänglich weißer, später hellbrauner Niederschlag aus, der dann abfiltriert und im Vakuum bei 200°C getrocknet wurde.

Infrarotspektroskopie [$cm^{-1}$]:

| | |
|---|---|
| 3038 (s, b) | ν NH |
| 1710 (s) | ν C=N |
| 1645 (m) | δ NH |
| 1422 (m) | |
| 1358 (m) | ν C-N |
| 1151 (w) | ν B-N |
| 1064 (w) | ν Si-N |
| 731 (w, b) | |
| 610 (w) | |

Pulverdiffraktometrie: amorph.
Energiedispersive Röntgenanalyse: homogenes Polymer.

512 mg des Polymers wurden im Stickstoffstrom mit 5 K/min auf 300°C und nach 4 h Haltezeit mit 5 K/min auf 1500°C geheizt. Man erhielt 113 mg graues Pyrolyseprodukt, entsprechend einer keramischen Ausbeute von 22 %.

Elementaranalyse [Gew.-%]: Si 26,2; B 13,4; N 33,3; C 21,6; O 6,0.

**Beispiel 4:**

**Darstellung eines Polyborosilazans mit Melamin**

Reaktionsgleichung:

$$(Me_2N)_3Si\text{-}NH\text{-}B(NMe_2)_2 + (H_2N)_3C_3N_3 \rightarrow [SiBN_xC_yH_z] + Me_2NH$$

(TABB)

Versuchsdurchführung:

In 250 ml Dimethylsulfoxid und 25 ml Dichlormethan wurden 5,3 g (0,042 mol) Melamin gelöst. Zu dieser Lösung wurden 2,7 g (0,01 mol) TABB gegeben. Die anfänglich klare Lösung trübte sich beim Erhitzen und es fiel ein brauner Niederschlag aus, der abfiltriert und im Vakuum bei 200°C getrocknet wurde.

Infrarotspektroskopie [$cm^{-1}$]:

| | |
|---|---|
| 3420 (m) | ν N-N |
| 1568 (s, b) | δ N-H |
| 1345 (s, b) | ν C-N |
| 812 (m) | δ C-N |
| 467 (w, b) | δ Si-N |

Pulverdiffraktometrie: amorph.

Energiedispersive Röntgenanalyse: homogenes Polymer.

832 mg des Polymers wurden im Stickstoffstrom mit 5 K/min auf 300°C und nach 4 h Haltezeit mit 5 K/min auf 1500°C geheizt. Man erhielt 258 mg graues Pyrolyseprodukt, entsprechend einer keramischen Ausbeute von 31 %.

Elementaranalyse [Gew.-%]: Si 40,5; B 5,5; N 26,6; C 11,7; O 7,3.

**Beispiel 5:**

**Darstellung eines Polyborosilazans mit Guanidin**

Reaktionsgleichung:

$$(Me_2N)_3Si\text{-}NH\text{-}B(NMe_2)_2 + H_2N\text{-}C(=NH)NH_2 \rightarrow [SiBN_xC_yH_z] + Me_2NH$$

(TABB)

Versuchsdurchführung:

Zu einer Lösung von 4,8 g (0,05 Mol) Guanidinhydrochlorid in 300 ml Pyridin wurde bei Siedetemperatur eine Lösung von 2,7 g TABB in 10 ml Pyridin über 1 h zugetropft. Man ließ die Reaktionsmischung noch weitere 3 h unter Rückfluß kochen. Es bildete sich ein harziger Feststoff, der durch Filtration vom Lösemittel abgetrennt wurde. Anschließend wurde im Vakuum getrocknet.

Infrarotspektroskopie [$cm^{-1}$]:

| | |
|---|---|
| 3295 (s,b) | ν N-H |
| 2771 (m), 2440 (w) | ν $NH_2^+$ |
| 1648 (s) | ν C=N |
| 1439 (m) | |
| 1068 (m) | ν Si-N |

Pulverdiffraktometrie: amorph.
Energiedispersive Röntgenanalyse: homogenes Polymer.

223 mg des Polymers wurden im Stickstoffstrom mit 5 K/min auf 300°C und nach 4 h Haltezeit mit 5 K/min auf 1500°C geheizt. Man erhielt 46,3 mg schwarzes Pyrolyseprodukt, entsprechend einer keramischen Ausbeute von 20,8 %.

Elementaranalyse [Gew.-%]: Si 27,9; B 11,1; N 35,0; C 23,1; O 2,3.

**Patentansprüche**

1. Polymere Silaborocarboazane der allgemeinen Strukturformel

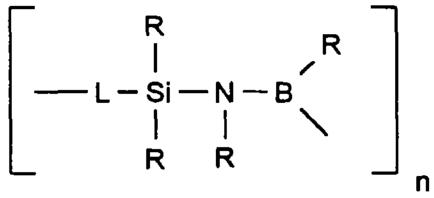

,

in denen jedes Si-Atom mit 2 Resten R und einem Rest L und jedes B-Atom mit einem Rest R und einem Rest L koordiniert ist, und Silicium und Bor über eine NR-Brücke verknüpft sind, wobei L = $C_xN_yH_z$ mit $x \geq 1$, $y \geq 1$ und $z \geq 0$ und R unabhängig voneinander = $C_1$-$C_6$-Alkyl, Vinyl, Phenyl oder L ist und n Werte von größer als fünf einnimmt.

**2.** Polymere Silaborocarboazane nach Anspruch 1, dadurch gekennzeichnet, daß die Elemente in homogener Verteilung vorliegen.

**3.** Polymere Silaborocarboazane nach einem der Ansprüche 1 bis 2, dadurch gekennzeichnet, daß die Elementverteilung bis zu einer Auflösung von 0,5 µm gleichförmig ist.

**4.** Verfahren zur Herstellung der polymeren Silaborocarboazane nach einem oder mehreren der Ansprüche 1 bis 3, dadurch gekennzeichnet, daß ein Borosilazanprecursor der Formel

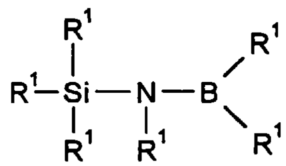

,

in dem $R^1$ unabhängig voneinander = H, Halogen, $C_1$-$C_6$-Alkyl, Vinyl, Phenyl und/oder $-NR^2_2$ mit $R^2$ = H, $C_1$-$C_6$-Alkyl, Vinyl oder Phenyl bedeutet, mit $C_xN_yH_z$-Molekülen umgesetzt wird, die freie NH- und/oder CH-Funktionen aufweisen und in denen $x \geq 1$, $y \geq 1$ und $z \geq 0$ ist.

**5.** Polymere Silaborocarboazane nach einem oder mehreren der Ansprüche 1 bis 3, dadurch gekennzeichnet, daß als Borosilazanprecursor $(Me_2N)_3Si\text{-}NH\text{-}B(NMe_2)_2$ eingesetzt wird.

**6.** Verfahren nach Anspruch 4, dadurch gekennzeichnet, daß als $C_xN_yH_z$-Molekül mit freien NH- und/oder CH-Funktionen Cyanamid, Guanidin, Formamidin und/oder Melamin eingesetzt wird.

**7.** Verwendung der polymeren Silaborocarboazane nach einem oder mehreren der Ansprüche 1 bis 3 zur Herstellung von keramischem Material durch Pyrolyse inerter, Stickstoff- oder Edelgas-haltiger Atmosphäre bei Temperaturen von 400 bis 2000°C.

**8.** Verwendung der polymeren Silaborocarboazane gemäß einem oder mehreren der Ansprüche 1 bis 3 zur Herstellung von keramischen Formkörpern, Folien, Fasern oder Beschichtungen durch Pyrolyse in Edelgas-, Stickstoff-, Ammoniak- oder primäre Amine-enthaltender Atmosphäre bei Temperaturen von 400 bis 2000°C.

Fig. 1

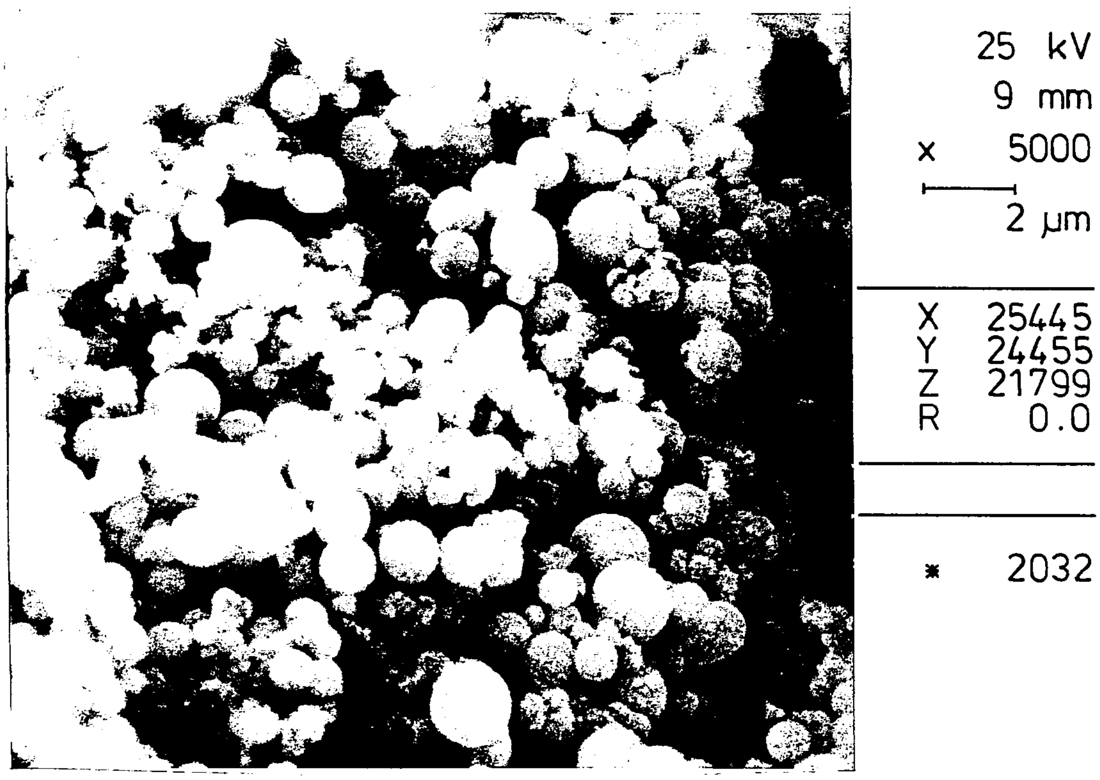

25 kV
9 mm
x 5000
2 µm

X 25445
Y 24455
Z 21799
R 0.0

* 2032

Europäisches Patentamt

# EUROPÄISCHER RECHERCHENBERICHT

Nummer der Anmeldung
EP 97 11 1976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 502 399 A (BAYER AG)<br>* Ansprüche 1-13 *<br>* Seite 4, Zeile 44 - Zeile 58 *<br>--- | 1 | C08G77/60<br>C04B35/589 |
| A | EP 0 404 503 A (TONEN CORP)<br>* Anspruch 1 *<br>--- | 1 | |
| P,A | DE 195 30 390 A (BAYER AG)<br>* Ansprüche 1-4 *<br>* Spalte 1, Zeile 29 - Zeile 54 *<br>--- | 1 | |
| P,A | DE 195 30 404 A (BAYER AG)<br>* Ansprüche 1-7 *<br>--- | 1 | |
| A | EP 0 424 082 A (MASSACHUSETTS INST TECHNOLOGY)<br>* Anspruch 1 *<br>--- | 1 | |
| A | DE 42 41 288 A (BAYER AG)<br>* Ansprüche 3,4,7 *<br>----- | 1 | |

RECHERCHIERTE SACHGEBIETE (Int.Cl.6)
C08G
C04B

Der vorliegende Recherchenbericht wurde für alle Patentansprüche erstellt

| Recherchenort | Abschlußdatum der Recherche | Prüfer |
|---|---|---|
| DEN HAAG | 6.November 1997 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)